# EUROPEAN PATENT APPLICATION

(11) **EP 4 703 530 A1**
(43) Date of publication of application: **04.03.2026**
(21) Application number: 25199152.7
(22) Date of filing: 29.08.2025
(51) Int. Cl.: E04C 2/24, B27N 3/00, B29C 43/00

(54) **RECYCLED BOARD AND MANUFACTURING METHOD THEREOF**

(30) Priority: 30.08.2024 TW 113132996
(71) Applicant: Wynist Retail Solutions Inc., Taipei City 104091 (TW)
(72) Inventor: CHIU, WEI-CHIH, 112032 Taipei City (TW); LU, HSUEH-CHENG, 111024 Taipei City (TW)
(74) Representative: AWA Sweden AB

(57) **Abstract**

A recycled board includes a plurality of fiber pieces (100, 100a, 100b, 100c) and an adhesive (300) . The plurality of fiber pieces are from recycled fabrics, and each has an average diameter of less than or equal to 10 mm. The adhesive includes at least one resin cured under the action of temperature, pressure, a curing agent, light rays or a combination thereof, and is mixed with the plurality of fiber pieces and molded. The total weight of the plurality of fiber pieces accounts for 50-80 wt% of the weight of the recycled board, and the weight of the adhesive accounts for 20-50 wt% of the weight of the recycled board.

## Description

### FIELD OF THE INVENTION

The present invention relates to a recycled board, particularly to a recycled board made from recycled fabrics.

### BACKGROUND OF THE INVENTION

Industrialization and fast fashion have caused a large amount of various textiles such as garments. With the increasing emphasis on environmental protection and sustainable resource utilization over the past decade, there has been development in the reuse of out-of-season or discarded textiles. However, the market value, practicality, and economic reliability of the manufacturing method of the recycled products affect whether they are successfully used.

### SUMMARY OF THE INVENTION

The present invention provides a recycled board that promotes resource recovery and utilization and reduces waste.

The recycled board provided by the present invention has a rich appearance and diverse applications, and its manufacturing process is simple, thus possessing high market value.

To achieve one or some or all of the above objectives or other objectives, an embodiment of the present invention provides a recycled board, including a plurality of fiber pieces and an adhesive. The plurality of fiber pieces are from recycled fabrics, and each has an average diameter of less than or equal to 10 mm. The adhesive includes at least one resin cured under the action of temperature, pressure, a curing agent, light rays, or a combination thereof, and is mixed with the plurality of fiber pieces and molded. The total weight of the plurality of fiber pieces accounts for 50-80 wt% of the weight of the recycled board, and the weight of the adhesive accounts for 20-50 wt% of the weight of the recycled board.

In an embodiment of the present invention, the fiber pieces are in various geometric shapes and irregular shapes, and the average diameter is obtained based on lengths of each of the fiber pieces in a plurality of directions.

To achieve one, some, or all of the foregoing objectives or other objectives, an embodiment of this application provides a recycled board, which is manufactured using a method including the following steps: recycling fabrics and performing a crushing process, where the crushing process includes crushing the recycled fabrics to obtain a fiber pigment, the fiber pigment is formed by a plurality of fiber pieces, and the plurality of fiber pieces each have an average diameter of less than or equal to 10 mm; performing a dry stirring process, where the dry stirring process includes dispersing the plurality of fiber pieces of the fiber pigment; performing a mixing and stirring process, where the mixing and stirring process includes: adding an adhesive, mixing the adhesive and the dispersed fiber pigment to obtain a mixture, and enabling the adhesive to fully infiltrate the plurality of fiber pieces, where a total weight of the adhesive accounts for 20-50 wt% of a weight of the mixture, and a total weight of the dispersed fiber pigment accounts for 50-80 wt% of the weight of the mixture; performing a feeding process, including placing the mixture of the adhesive and the plurality of fiber pieces into a mold; performing a rolling process, including: rolling the mixture of the adhesive and the plurality of fiber pieces, and filling up the mold with the mixture; and performing a hot pressing process, including closing the mold and hot pressing the mixture for molding at a specific temperature.

In the present invention, using the plurality of fiber pieces of which the total weight accounts for 50-80 wt% of the weight of the recycled board is conducive to improving resource recycling efficiency and reducing waste. Since the crushing process of the manufacturing method can obtain fiber pieces with an average diameter of less than or equal to 10 mm, and the dry stirring process follows the crushing process, the provided recycled board has a rich appearance and possesses high market value. As the recycled board is manufactured through processes such as mixing and stirring, rolling, and hot pressing, with the use of the adhesive containing a resin, the percentage of the adhesive being 20-50 wt%, and the resin is cured under the action of temperature, pressure, a curing agent, light rays, or a combination thereof, the recycled board can have different strength ranges to meet various applications.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

FIG. 1 is a schematic flowchart of a manufacturing method of a recycled board according to an embodiment of the present invention;
FIG. 2 is a schematic three-dimensional diagram of a mold according to an embodiment of the present invention;
FIG. 3 is a schematic side view illustrating the manufacturing method of the recycled board according to an embodiment of the present invention;
FIG. 4 is another schematic side view illustrating the manufacturing method of the recycled board according to an embodiment of the present invention;
FIG. 5 is another schematic side view illustrating the manufacturing method of the recycled board according to an embodiment of the present invention; and
FIG. 6 is a partially schematic top view of the recycled board according to an embodiment of the present invention.

### DETAILED DESCRIPTION OF PREFERRED EMBODIMENTS

The present invention provides a recycled board made from recycled fabrics and a manufacturing method thereof. The fabrics may include but are not limited to clothes, curtains, bedding, cloth towels, and cloth covers made from natural fibers, synthetic fibers, or a combination thereof. The natural fibers include but are not limited to cotton, linen, silk, wool, or a combination thereof, and the synthetic fibers include but are not limited to nylon, polyester, acrylic fibers, acetate fibers, or a combination thereof. According to the recycled board of the present invention, the use of the recycled fabrics is conducive to reducing waste, and the diverse sources of the recycled fabrics contribute to the formation of the recycled board with diverse compositions and rich appearances. The recycled board of the present invention is not limited to a flat rectangular shape with specific length, width, and height, but may be of other shapes. The recycled board of the present invention may be used as, for example, building materials, furniture, or decorations, with functions such as partitioning, storing, loading, or displaying, but is not limited herein.

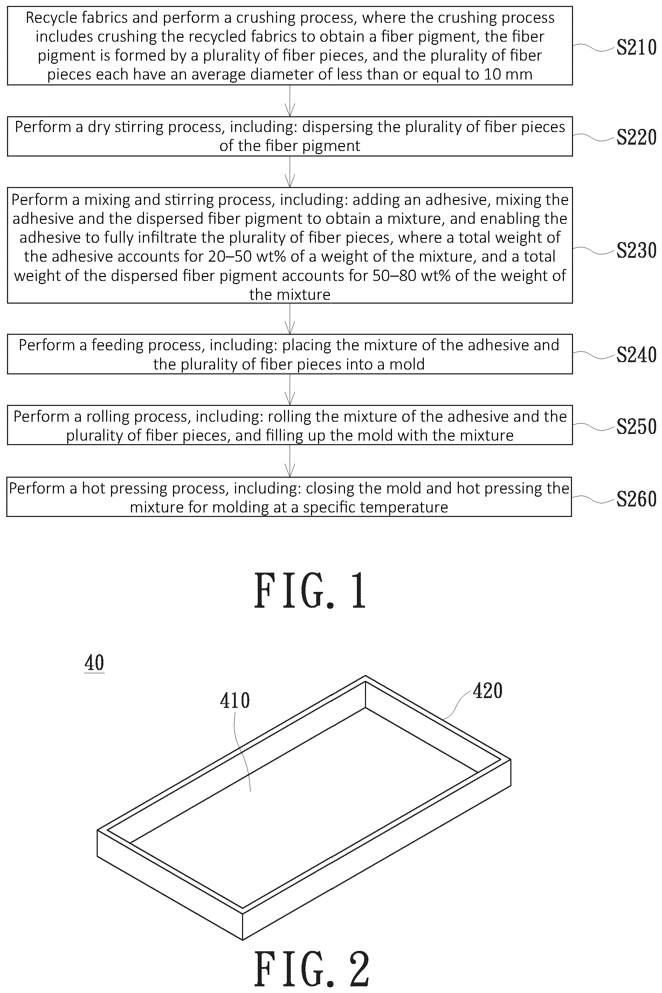

FIG. 1 shows a manufacturing method of a recycled board according to an embodiment of the present invention, including the following steps. Step S210: Recycle fabrics and perform a crushing process. The crushing process includes crushing the recycled fabrics to obtain a fiber pigment, where the fiber pigment is formed by a plurality of fiber pieces, and the plurality of fiber pieces each have an average diameter of less than or equal to 10 mm. Step S220: Perform a dry stirring process, including dispersing the plurality of fiber pieces of the fiber pigment. Step S230: Perform a mixing and stirring process, including: adding an adhesive, mixing the adhesive and the dispersed fiber pigment to obtain a mixture, and enabling the adhesive to fully infiltrate the plurality of fiber pieces, where a total weight of the adhesive accounts for 20-50 wt% of a weight of the mixture, and a total weight of the dispersed fiber pigment accounts for 50-80 wt% of the weight of the mixture. Step S240: Perform a feeding process, including placing the mixture of the adhesive and the plurality of fiber pieces into a mold. Step S250: Perform a rolling process, including: rolling the mixture of the adhesive and the plurality of fiber pieces, and filling up the mold with the mixture. Step S260: Perform a hot pressing process, including closing the mold and hot pressing the mixture for molding at a specific temperature.

### Step S210:

The recycled fabrics in step 210 may be from material suppliers or directly from sales channels of clothes, curtains, bedding, cloth towels, and cloth covers as mentioned above, which is not limited in the present invention. The recycled fabrics may undergo preprocessing before entering the crushing process. The preprocessing may include, for example, fabric classification, accessory removal, large-size cutting, and feed inventory management, but is not limited herein. The fabric classification may include appropriate classifications based on, for example, fiber composition and color of the fabric. The accessory removal may include, for example, removing materials other than fiber products from the fabrics, which are for example, but not limited to buttons, zippers, and decorations. The large-size cutting may include cutting large-area fabrics into specific sizes. The feed inventory management may include numbering the classified fabrics and inputting them into an inventory management system to facilitate subsequent steps.

For example, the recycled fabrics may include first recycled fabrics and second recycled fabrics. The first recycled fabrics and the second recycled fabrics may differ in color, but are not limited herein. In addition, in several embodiments, the recycled fabrics may further include third recycled fabrics, which may differ from the first and second recycled fabrics in color and/or fiber composition. The first, second, and third recycled fabrics may be separately numbered after preprocessing. For example, through the numbering, relevant information about the first, second, or third recycled fabrics, including but not limited to fiber type and composition, color, and inventory quantity, can be searched for on the inventory management system. Additionally, it can be known that the quantity or type of the recycled fabrics is not limited.

In a preferred embodiment of the present invention, a crushing sieve is used in the crushing process to obtain the recycled fabrics and thus obtain the fiber pigment. The crushing sieve may refer to a screen mesh used in conjunction with a crushing device. The crushing device may have, for example, blades that preferably rotate quickly and generate shear force with the wall surface to cut and tear the fabrics into fiber pieces. The crushed fiber pieces with suitable sizes are then screened using the crushing sieve.

Therefore, the fiber pigment may be composed of a plurality of fiber pieces, and in a preferred embodiment of the present invention, the mesh size of the crushing sieve substantially affects the size of the fiber pieces. For example, a 10 mm mesh size preferably results in fiber pieces with an average diameter of less than or equal to 10 mm, while a 5 mm mesh size preferably results in fiber pieces with an average diameter of less than or equal to 5 mm. For example, the first recycled fabrics may be crushed through a crushing sieve with a mesh size of 10 mm to obtain the first fiber pigment, while the second recycled fabrics may be crushed through a crushing sieve with a mesh size of 5 mm to obtain the second fiber pigment. Therefore, the first fiber pigment and the second fiber pigment differ at least in color and fiber piece size, that is, the first fiber pieces are generally larger than the second fiber pieces.

The fiber pieces may be in various geometric shapes such as circle, rectangle, parallelogram, trapezoid, triangle, and polygon, and they may also be in irregular shapes. In the embodiments of the present invention, the fiber pieces have lengths in a plurality of directions, and the "average diameter of the fiber piece" mentioned above may be obtained based on the lengths of each fiber piece in the plurality of directions. For example, when the fiber piece is a parallelogram, its average diameter may be obtained based on the lengths of four different sides and two diagonals, but is not limited herein. It should be noted, however, that since fibers are generally soft and flexible, and can have different compositions and weaving methods, there may be exceptions to the principles of "fiber pieces having an average diameter of less than or equal to 10 mm" and "fiber pieces having an average diameter of less than or equal to 5 mm."

### Step S220:

The dry stirring process of step S220 may include eliminating the entanglement, mutual adsorption, and agglomeration among the fiber pieces in the fiber pigment, allowing them to be dispersed well, to facilitate subsequent steps. In the embodiments of the present invention, in the dry stirring process, the fiber pieces of different fiber pigments may be dispersed simultaneously. For example, based on the requirements for the recycled board in, for example, appearance, texture, and use, the first fiber pigment and the second fiber pigment may be taken in proportion and dispersed simultaneously, and the first fiber pieces and the second fiber pieces are mixed to uniformity. In this way, for example, a mixed effect of two colors can be obtained.

In a preferred embodiment of the present invention, a claw screw is used in the dry stirring process. The claw screw features a plurality of claws arranged on the screw, with a front end of each claw welded to an iron piece. During the dry stirring process, the claw screw can drive the fiber pigment to rub against an inner wall surface of a dry stirring barrel, generating shear force, thereby eliminating static adsorption in the fiber pigment, creating a shearing effect on the fiber pigment, breaking the bridging phenomenon caused by the fibers, and reducing the entanglement and agglomeration among fiber pieces to make them dispersed well. When the first fiber pigment and the second fiber pigment are subjected to the dry stirring process simultaneously, the first fiber pieces and the second fiber pieces are placed together in the barrel, and then dry stirred, mixed, and dispersed with the claw screw, thus obtaining first fiber pieces and second fiber pieces that are mixed to uniformity. The duration required for the dry stirring process may range from several minutes to several tens of minutes, and may be adjusted based on, for example, the quantity and fiber composition of the fiber pigment. In a preferred embodiment of the present invention, the dry stirring process is mainly performed for at least 10 minutes.

### Step S230:

The mixing and stirring process of step S230 may include adding an adhesive, mixing the adhesive with the dispersed fiber pigment, and enabling the adhesive to fully infiltrate the fiber pieces in the fiber pigment. In the embodiments of the present invention, the adhesive includes at least one resin that can be cured under the action of temperature, pressure, a curing agent, light rays, or a combination thereof. Preferably, the adhesive is selected from an epoxy resin, a polyurethane resin, a resin with a weight ratio of 1.0-1.2 at 25°C and a viscosity of 1000-2000 cps, a resin with a weight ratio of 0.9-1.1 at 25°C and a viscosity of 60-180 cps, a resin with a solid content of 80-100%, or a combination thereof. The viscosity may be, for example, measured according to ASTM D2393 standard, the weight ratio may be, for example, measured according to ASTM D1475 standard, and the solid content may be, for example, measured according to ASTM D1259 standard, but they are not limited herein. In several embodiments, for example, epoxy resin AB glue may be used as the adhesive, where agent A (the main agent) is epoxy resin, agent B is the curing agent, and the two agents can harden after mixed. The hardening degree varies depending on the amount of epoxy resin, the amount of the curing agent, and whether heating, pressing, or light exposure is applied during hardening. Furthermore, heating temperature, heating time, pressure, pressing time, light wavelength, and the like also affect the hardening degree. In a preferred embodiment of the present invention, heating and pressing processes can shorten the hardening time, increase the density of the finished product, and enhance the physical strength.

In the embodiments of the present invention, the amount of adhesive may account for 20-50 wt% of the total weight of the adhesive and the fiber pigment, while the amount of fiber pigment may account for 50-80% of the total weight. The ratio between the two may vary depending on the application of the recycled board. For example, a recycled board for general use may be manufactured with a 30 wt% adhesive and a 70 wt% fiber pigment. If the recycled board is used as a load-bearing structure such as furniture, the amount of the adhesive may be increased, for example, to 40 wt%; conversely, if the recycled board does not need to bear load and is used as, for example, a decorative panel, the amount of the adhesive may be reduced, for example, to 20 wt%. However, based on the preferred selection of the adhesive in the present invention, the amount of the adhesive in the recycled board can consistently be lower, meaning the amount of the used fiber pigment can be higher. Therefore, the present invention can more effectively achieve resource recycling.

In an embodiment of the present invention, the mixing and stirring process further includes mixing and stirring the adhesive and the dispersed fiber pigment in at least two directions. In the mixing and stirring process, a claw screw may also be used. In this case, the dispersed fiber pigment after the dry stirring process may be left in the original barrel, and the adhesive is then added. Then, the claw screw is activated to operate in two directions, for example, mixing and stirring clockwise for several minutes, such as 5-10 minutes, and then mixing and stirring counterclockwise for the same time. This can be repeated until the mixing is complete. Additionally, the claw screw can perform a reciprocating motion relative to the bottom of the barrel, so as to punch the mixture downwards, allowing the adhesive to fully infiltrate the fiber pieces, such that the fiber pieces are fully coated with the adhesive, thus ensuring the quality of the finished product.

### Step S240:

The feeding process of step S240 includes preparing a mold and placing the mixture of the adhesive and the fiber pieces from step S230 into the mold. The mold may be selected based on the desired shape of the recycled board, and the selection of the material can refer to the conventional technology in the molding industry and thus is not elaborated herein, but it is preferable to use heat-resistant types. As shown in FIG. 2, in several embodiments of the present invention, the mold 40 has a bottom plate 410 and a side wall 420 surrounding the bottom plate 410. The bottom plate 410 may be in various shapes, and the height of the side wall 420 is preferably consistent, but is not limited herein. The feeding process is preferably to fill the mold 40 with a substantially equal amount of the mixture according to the volume of the mold 40, but is not limited herein. During the feeding process, the mixture is evenly distributed in the mold 40 as much as possible, for example, by spreading the mixture flat in the mold 40, to facilitate subsequent steps.

### Step S250:

The rolling process of step S250 includes rolling the mixture of the adhesive and the fiber pieces and filling up the mold with it. The rolling process can substantially be carried out by, for example, a cylinder, a roller, a round bar, or a round column, and is not limited to manual or mechanical operations. Further, the rolling process may include several operational stages. First, the mixture is completely fed into the mold, and the operation may include rolling the cylinder on the mixture to compress the mixture into the mold. Preferably, the movement of the cylinder as it rolls is parallel to the bottom plate of the mold (also known as horizontal rolling), meaning that the cylinder horizontally rolls the fed mixture and presses it into the mold while leveling it. The cylinder may further roll in two directions, for example, roughly in the x direction, rolling from one end of the mold to the opposite end and back to the original end, reciprocating in this manner; or rolling back and forth from the center of the mold to two opposite ends. For example, the cylinder horizontally rolls left from the center of the mold to the left end and back to the center, and horizontally rolls right to the right end and back to the center. Alternatively, the cylinder horizontally rolls forwards from the center of the mold to a front end and back to the center and horizontally rolls backwards to a rear end and back to the center.

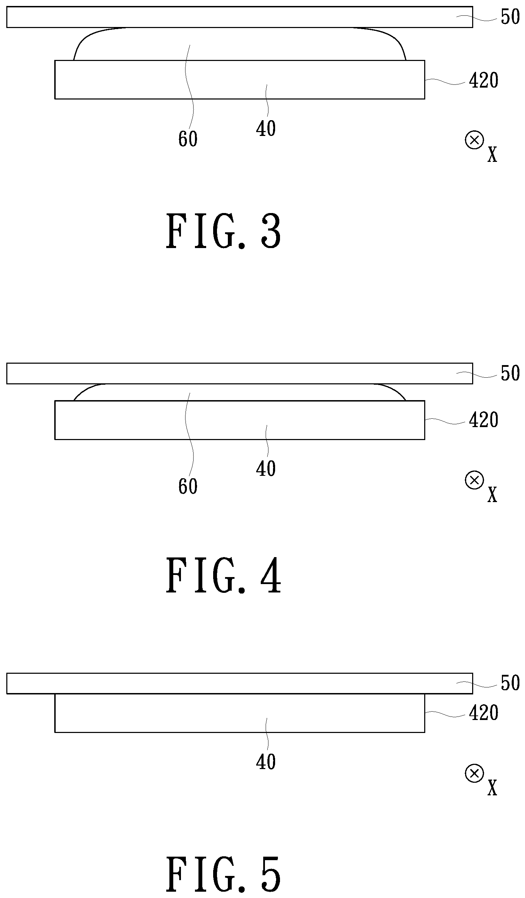

As shown in FIG. 3, in several embodiments of the present invention, the cylinder 50 may have a specific length, so as to span the mold 40 and rest on the side wall 420. As the reciprocal rolling proceeds, as shown in FIG. 4, the cylinder 50 gradually presses the fed mixture 60 into the mold 40, and then rolls the fed mixture 60 to be no higher than the top end of the side wall 420. The cylinder 50 may also reliably rest against the side wall 420 of the mold 40, thereby rolling and leveling the fed mixture 60 to be flush with the top end of the side wall 420. Finally, the rolling of the cylinder 50 allows the mixture 60 to fill up the mold 40 and to be attached to the bottom plate 410 and side wall 420, completing the rolling process.

In several embodiments, step S250 may be performed entirely through mechanical operations. For example, a numerical control roller may be used, with the set height of the roller on the mold 40, to gradually press the fed mixture 60 into the mold 40, and level and fill up the mold 40. With the set height, for example, the wheel cutting surface at the bottom of the numerical control roller is 10 mm above the mold 40 in the first stage, 5 mm above the mold 40 in the second stage, and 0 mm above the mold 40 in the third stage. To be specific, since the fed mixture 60 has not yet fully entered the mold 40 and is higher than the mold 40 in the first stage, the numerical control roller can come in contact with and roll the fed mixture 60 at 10 mm above the mold 40. As the rolling continues, the more the mixture 60 enters the mold 40, the less it is higher than the mold 40. So the numerical control roller in the second stage is adjusted to 5 mm above the mold 40 to contact and continuously roll the fed mixture. In the third stage, the numerical control roller rolls, along the top of the mold 40, the fed mixture 60 to be flush with the top end of the side wall 420, completing the rolling process. The set height and three stages are merely examples and the present invention is not limited herein.

### Step S260:

The hot pressing process of step S260 includes closing the mold and hot pressing the mixture for molding at a specific temperature. The temperature condition for the hot pressing process is 90-110°C, preferably 90°C, and the pressure condition is 100-120 tons, typically 120 tons. The time is several tens of minutes. Typically, the hot pressing time is 30-60 minutes. Additionally, the hot pressing time can vary with temperature. For example, hot pressing can be performed for 40 minutes at 90°C, 30 minutes at 100°C, and 20 minutes at 110°C, but is not limited herein. After the hot pressing process, cooling is performed to complete the shaping, and the mold is removed to obtain the recycled board. In a preferred embodiment of the present invention, the cured adhesive is transparent, allowing the fiber pieces embedded therein to reveal their colors, textures, shapes, or a combination thereof.

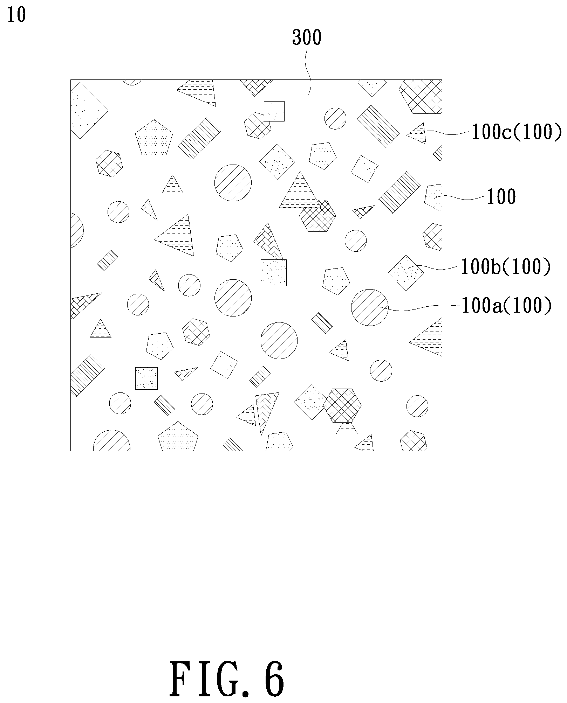

The present invention also provides a recycled board manufactured using the foregoing method. FIG. 6 is a schematic top view of the recycled board according to an embodiment of the present invention. As shown in FIG. 6, the recycled board 10 includes a plurality of fiber pieces 100 and an adhesive 300. The fiber pieces 100 are sourced from recycled fabrics, and each has an average diameter of less than or equal to 10 mm, for example, 10 mm or 5 mm. The fiber pieces are in various geometric shapes and irregular shapes, with lengths in a plurality of directions. The average diameter may be obtained based on the lengths of each of the fiber pieces in a plurality of directions. As shown in FIG. 6, for example, the fiber piece 100a is approximately circular and its average diameter is obtained based on diameters in all directions, which may be 10 mm. The fiber piece 100b is approximately square and its average diameter is obtained based on the diagonal length of the square, which may be 5 mm. The fiber piece 100c is approximately triangular and the average diameter is obtained based on the side length of the triangle, which may be 5 mm. In a preferred embodiment of the present invention, the average diameter of the fiber piece is further defined as the maximum length of each fiber piece, which is the diameter for a circular shape, the diagonal for a square shape, and the side length for an equilateral triangular shape.

The adhesive 300 includes at least one resin that can be cured under the action of temperature, pressure, a curing agent, light rays, or a combination thereof, and is further a cured resin. The adhesive 300 and the plurality of fiber pieces are mixed and molded. The molding conditions cause the adhesive 300 to cure. In several embodiments of the present invention, the adhesive 300 and the plurality of fiber pieces 100 are mixed and hot molded. During the mixing, the adhesive 300 can fully infiltrate the fiber pieces 100, to cover their surfaces. During the hot molding, the temperature used may be, for example, 90°C or above, and pressure is applied preferably, allowing for hot pressing and molding. As shown in FIG. 6, because the cured adhesive 300 is preferably transparent, the fiber pieces 100 mixed within can be seen. Due to the full infiltration of the adhesive 300 during the manufacturing process, the fiber pieces 100 are preferably not exposed from the surface of the recycled board 10, but can present their characteristics such as color, texture, and shape.

In summary, in the embodiments of the present invention, the plurality of fiber pieces, of which the total weight accounts for 50-80 wt% of the weight of the recycled board, is used, that is, a large amount of recycled fabrics are used, which is conducive to improving resource recycling efficiency and reducing waste. Through the crushing process in the manufacturing method, the fiber pieces can be obtained, and may be in various geometric shapes and irregular shapes with lengths in the plurality of directions. The dry stirring process follows the crushing process, so the recycled board of the embodiments of the present invention has a rich appearance and possesses high market value. The recycled board is manufactured through processes such as mixing and stirring, rolling, and hot pressing, where the percentage of the adhesive is 20-50 wt%, and the adhesive includes the resin cured under the action of temperature, pressure, a curing agent, light rays, or a combination thereof, so the recycled board in the embodiments of the present invention has enough strength to provide functions, including but not limited to partitioning, storing, loading, and displaying.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A recycled board (10), comprising
a plurality of fiber pieces (100, 100a, 100b, 100c), wherein the fiber pieces (100, 100a, 100b, 100c) are from recycled fabrics, and each of the fiber pieces has an average diameter of less than or equal to 10 mm; and
an adhesive (300), comprising at least one resin cured under action of temperature, pressure, a curing agent, light rays, or a combination thereof and mixed with and modeled together with the fiber pieces (100, 100a, 100b, 100c), wherein a total weight of the fiber pieces accounts for 50-80 wt% of a weight of the recycled board, and a weight of the adhesive accounts for 20-50 wt% of the weight of the recycled board.

2. The recycled board (10) according to claim 1, **characterized in that** the fiber pieces (100, 100a, 100b, 100c) are in various geometric shapes and irregular shapes, and the average diameter is obtained based on lengths of each of the fiber pieces in a plurality of directions.

3. The recycled board (10) according to claim 1, **characterized in that** the geometric shapes comprise circle, rectangle, parallelogram, trapezoid, triangle, and polygon.

4. The recycled board (10) according to claim 1, **characterized in that** the fiber pieces (100, 100a, 100b, 100c) each further have an average diameter of less than or equal to 5 mm.

5. The recycled board (10) according to claim 1, **characterized in that** the total weight of the fiber pieces further accounts for 60-80 wt% of the weight of the recycled board.

6. The recycled board (10) according to claim 1, **characterized in that** the adhesive (300) is selected from an epoxy resin, a polyurethane resin, a resin with a weight ratio of 1.0-1.2 at 25°C and a viscosity of 1000-2000 cps, a resin with a weight ratio of 0.9-1.1 at 25°C and a viscosity of 60-180 cps, or a combination thereof.

7. The recycled board (10) according to claim 1, **characterized in that** the molding is hot molding, and a temperature of the hot molding is 90°C or above.

8. A recycled board (10), manufactured using a method comprising the following steps:
recycling fabrics and performing a crushing process, wherein the crushing process comprises crushing the recycled fabrics to obtain a fiber pigment, the fiber pigment is formed by a plurality of fiber pieces, and the fiber pieces each have an average diameter of less than or equal to 10 mm;
performing a dry stirring process, wherein the dry stirring process comprises dispersing the fiber pieces of the fiber pigment;
performing a mixing and stirring process, wherein the mixing and stirring process comprises: adding an adhesive, mixing the adhesive and the dispersed fiber pigment to obtain a mixture, and enabling the adhesive to fully infiltrate the fiber pieces, wherein a total weight of the adhesive accounts for 20-50 wt% of a weight of the mixture, and a total weight of the dispersed fiber pigment accounts for 50-80 wt% of the weight of the mixture;
performing a feeding process, comprising placing the mixture of the adhesive (300) and the fiber pieces (100, 100a, 100b, 100c) into a mold (40);
performing a rolling process, comprising: rolling the mixture of the adhesive (300) and the fiber pieces (100, 100a, 100b, 100c), and filling up the mold (40) with the mixture; and
cooling the mixture for molding.

9. The recycled board (10) according to claim 8, **characterized in that** the recycled fabrics further comprise first recycled fabrics and second recycled fabrics, the first recycled fabrics being different from the second recycled fabrics, the crushing process further comprises separately crushing the first recycled fabrics and the second recycled fabrics to obtain a first fiber pigment and a second fiber pigment, the first fiber pigment is formed by a plurality of first fiber pieces, and the second fiber pigment is formed by a plurality of second fiber pieces.

10. The recycled board (10) according to claim 9, **characterized in that** the first fiber pigment and the second fiber pigment have different color codes.

11. The recycled board (10) according to claim 9, **characterized in that** the dry stirring process further comprises simultaneously dispersing the first fiber pieces of the first fiber pigment and the second fiber pieces of the second fiber pigment, and mixing the first fiber pieces and the second fiber pieces.

12. The recycled board (10) according to claim 8, **characterized in that** the crushing process further comprises using a crushing sieve to obtain the recycled fabrics, a mesh size of the crushing sieve being 10 mm or less than 10 mm.

13. The recycled board (10) according to claim 8, **characterized in that** the dry stirring process further comprises using a claw screw to disperse the fiber pieces of the fiber pigment in a barrel, and enabling the claw screw to drive the fiber pigment to rub against an inner wall surface of the barrel and to cut the fiber pigment.

14. The recycled board (10) according to claim 13, **characterized in that** the mixing and stirring process further comprises using the claw screw to mix the adhesive and the dispersed fiber pigment in the barrel, and enabling the claw screw to mix and stir the adhesive and the dispersed fiber pigment in at least two directions to obtain a mixture, and to punch the mixture, such that the adhesive fully infiltrates the fiber pieces.

15. The recycled board (10) according to claim 14, **characterized in that** the step of using the claw screw to mix the adhesive and the dispersed fiber pigment further comprises performing mixing and stirring clockwise for several minutes and performing mixing and stirring anticlockwise for several minutes.

16. The recycled board (10) according to claim 8, **characterized in that** the adhesive (300) comprises a resin cured under action of temperature, pressure, a curing agent, light rays, or a combination thereof.

17. The recycled board (10) according to claim 8, **characterized in that** the mold (40) has a bottom plate (410) and a side wall (420) surrounding the bottom plate (410), and the rolling process further comprises using a cylinder (50) to roll the mixture in two directions parallel to the bottom plate.

18. The recycled board (10) according to claim 17, **characterized in that** the rolling process further comprises filling up the mold (40) with the mixture with a height being flush with a top end of the side wall (420).

19. The recycled board (10) according to claim 17, **characterized in that** the cylinder (50) further rolls back and forth towards two opposite ends from a center of the mold (40), this process comprising:
the cylinder (50) horizontally rolls left from the center of the mold (40) to a left end and back to the center, and horizontally rolls right to a right end and back to the center; or
the cylinder (50) horizontally rolls forwards from the center of the mold (40) to a front end and back to the center, and horizontally rolls backwards to a rear end and back to the center.

20. The recycled board (10) according to claim 8, **characterized in that** the manufacturing method further comprises a step: performing a hot pressing process, comprising closing the mold and hot pressing the mixture for molding at a specific temperature.

21. The recycled board (10) according to claim 20, **characterized in that** the hot pressing process is further performed at a temperature of 90-110°C, under a pressure of 110-120 tons, for several tens of minutes.

22. The recycled board (10) according to claim 20, **characterized in that** the manufacturing method further comprises performing cooling for shaping after molding closing and hot pressing for molding, and removing the mold (40) to obtain the recycled board (10).
